(19) **Europäisches Patentamt**

**European Patent Office**

**Office européen des brevets**

(11) **EP 1 238 202 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **01971685.1**

(22) Anmeldetag: **31.08.2001**

(51) Int Cl.:
**F16D 48/06** (2006.01)

(86) Internationale Anmeldenummer:
**PCT/DE2001/003357**

(87) Internationale Veröffentlichungsnummer:
**WO 2002/023059 (21.03.2002 Gazette 2002/12)**

(54) **VERFAHREN UND EINRICHTUNG ZUM BETRIEB EINER KUPPLUNG**

METHOD AND DEVICE FOR OPERATING A CLUTCH

PROCEDE ET DISPOSITIF D'EXPLOITATION D'UN EMBRAYAGE

(84) Benannte Vertragsstaaten:
**DE FR GB**

(30) Priorität: **15.09.2000 DE 10045757**

(43) Veröffentlichungstag der Anmeldung:
**11.09.2002 Patentblatt 2002/37**

(73) Patentinhaber: **ROBERT BOSCH GMBH**
**70442 Stuttgart (DE)**

(72) Erfinder:
• **SENGER, Karl-Heinz**
**48331 Farminton Hills (US)**

• **BAEUERLE, Peter**
**71636 Ludwigsburg (DE)**
• **VEENHUIZEN, Bram**
**NL-5051 ED Goirle (NL)**
• **SPIJKER, Engbert**
**NL-5702 LG Helmond (NL)**
• **VAN SPIJK, Gert-Jan**
**NL-5151 VT Drunen (NL)**

(56) Entgegenhaltungen:
**DE-A- 19 504 847        DE-A- 19 751 455**
**US-A- 5 630 773**

**Beschreibung**

Die Erfindung betrifft ein Verfahren und eine Einrichtung zum Betrieb einer Kupplung zwischen einem Verbrennungsmotor und zumindest einem Antriebsrad eines Fahrzeugs, wobei durch Zusammenpressen der Kupplung mit einer Anpreßkraft oder einem Anpreßdruck ein Moment zwischen dem Verbrennungsmotor und dem Antriebsrad übertragen wird.

Wird eine Kupplung schlupfend betrieben, so können bei bekanntem Reibkoeffizient des Kupplungsbelags Rückschlüsse auf das übertragene Kupplungsmoment gezogen werden. Diese Momenteninformation soll zur Bestimmung des Getriebeeingangsmoments herangezogen werden. Eine genaue Erfassung des Getriebeeingangsmoments ist insbesondere bei stufenlosen Automatikgetrieben (CVT) von Bedeutung, damit der Sicherheitsdruck bei der Bandspannungsregelung von Umschlingungsgetrieben reduziert und der Getriebewirkungsgrad erhöht werden kann.

Aus der DE 197 51 455 A1 ist ein Verfahren zum automatisierten Regeln einer Kraftfahrzeugkupplung bekannt, bei dem der Istwert des Kupplungsschlupfes mit einem Sollwert verglichen wird. In Abhängigkeit von dem Vergleich regelt ein Regler den Ansteuerstrom einer Hydraulik solange, bis das gewünschte Drehmoment von der Kupplung übertragen wird.

Es ist Aufgabe der Erfindung, den Betrieb einer Kupplung zu verbessern.

Die Aufgabe wird durch ein Verfahren bzw. eine Einrichtung zum Betrieb einer Kupplung zwischen einem Verbrennungsmotor und zumindest einem Antriebsrad eines Fahrzeugs gemäß Anspruch 1 bzw. gemäß Anspruch 4 gelöst, wobei zum Betrieb einer Kupplung zwischen einem Verbrennungsmotor und zumindest einem Antriebsrad eines Fahrzeugs durch Zusammenpressen der Kupplung mit einer Anpreßkraft oder einem Anpreßdruck ein Moment zwischen dem Verbrennungsmotor und dem Antriebsrad übertragen wird, wobei die Anpreßkraft oder der Anpreßdruck in Abhängigkeit eines Kupplungsschlupfes in der Kupplung bei Übertragung des Momentes zwischen dem Verbrennungsmotor und dem Antriebsrad und einem Soll-Kupplungsschlupf geregelt wird und die Anpreßkraft oder der Anpreßdruck mittels eines inversen Kupplungsmodells geregelt wird, das die Anpreßkraft oder den Anpreßdruck in Abhängigkeit des über die Kupplung zu übertragenden Momentes errechnet.

In vorteilhafter Ausgestaltung der Erfindung wird die Anpreßkraft oder der Anpreßdruck in Abhängigkeit der Differenz zwischen dem Kupplungsschlupf und dem Soll-Kupplungsschlupf geregelt.

In weiterhin vorteilhafter Ausgestaltung der Erfindung wird die Anpreßkraft oder der Anpreßdruck mittels eines Schlupfreglers geregelt.

Die erfindungsgemäße Einrichtung zum Betrieb einer Kupplung zwischen einem Verbrennungsmotor und zumindest einem Antriebsrad eines Fahrzeugs, wobei durch Zusammenpressen der Kupplung mit einer Anpreßkraft oder einem Anpreßdruck ein Moment zwischen dem Verbrennungsmotor und dem Antriebsrad übertragen wird, weist einen Schlupfregler zur Regelung der Anpreßkraft oder des Anpreßdrucks in Abhängigkeit eines Kupplungsschlupfes in der Kupplung bei Übertragung des Momentes zwischen dem Verbrennungsmotor und dem Antriebsrad und einem Soll-Kupplungsschlupf auf. Der Schlupfregler weist ein inverses Kupplungsmodell zur Errechnung der Anpreßkraft oder des Anpreßdrucks in Abhängigkeit des über die Kupplung zu übertragenden Momentes auf.

In weiterhin vorteilhafter Ausgestaltung der Erfindung weist der Schlupfregler einen Regler zur Errechnung eines Differenzmomentes in Abhängigkeit des Kupplungsschlupfes und dem Soll-Kupplungsschlupf auf.

In weiterhin vorteilhafter Ausgestaltung der Erfindung ist die Eingangsgröße des inversen Kupplungsmodells von dem Differenzmoment abhängig.

In weiterhin vorteilhafter Ausgestaltung der Erfindung ist die Summe aus Differenzmoment und dem durch den Verbrennungsmotor erzeugte Motormoment Eingangsgröße des inversen Kupplungsmodells.

In weiterhin vorteilhafter Ausgestaltung der Erfindung ist der Reibkoeffizient der Kupplung ein Parameter des inversen Kupplungsmodells.

In weiterhin vorteilhafter Ausgestaltung der Erfindung ist ein Adaptierer zur Adaption des Reibkoeffizienten der Kupplung vorgesehen.

Weitere Einzelheiten und Vorteile ergeben sich aus nachfolgender Beschreibung von Ausführungsbeispielen. Im einzelnen zeigen:

Fig. 1    ein Antriebsaggregat für ein Kraftfahrzeug
Fig. 2    eine Kupplungssteuerung
Fig. 3    einen Schlupfregler
Fig. 4    einen Ablaufplan
Fig. 5    eine Reibkoeffizient-Schlupf-Kennline
Fig. 6    einen Ablaufplan
Fig. 7    eine Erläuterung des Ablaufplans gemäß Fig. 4
Fig. 8    eine Erläuterung des Ablaufplans gemäß Fig. 6
Fig. 9    ein vorteilhaftes Ausführungsbeispiel einer Kupplungssteuerung

Fig. 10    ein alternatives Ausführungsbeispiel für einen Schlupfregler
Fig. 11    Schlupf aufgetragen über die Zeit
Fig. 12    Schlupf aufgetragen über die Zeit
Fig. 13    eine Kupplung

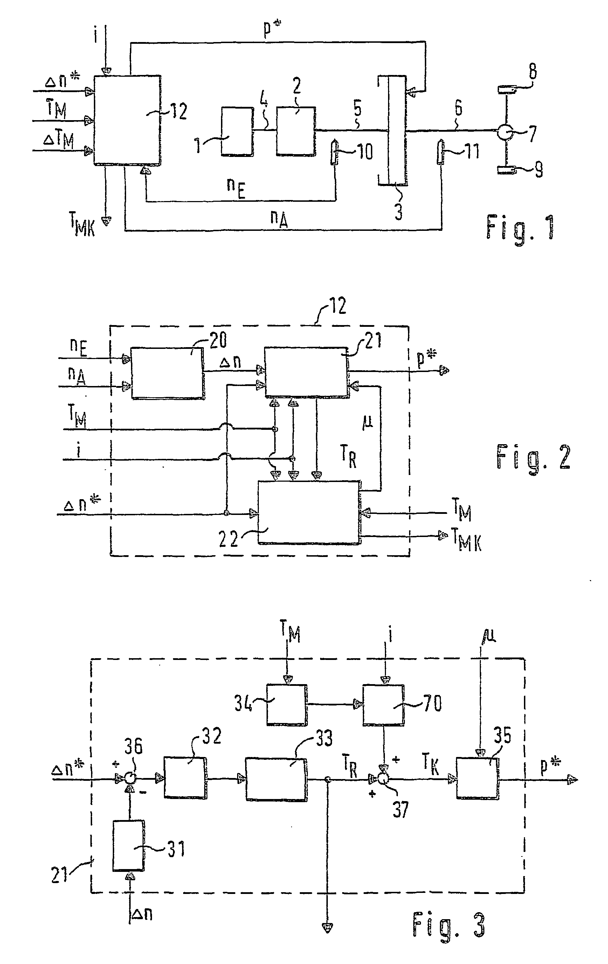

Fig. 1 zeigt ein Antriebsaggregat für ein Kraftfahrzeug. Dabei bezeichnet Bezugszeichen 1 einen Verbrennungsmotor, der über eine Welle 4 mit einem Automatikgetriebe 2 verbunden ist. Das Automatikgetriebe 2 ist im besonders vorteilhafter Weise als stufenloses Umschlingungsgetriebe ausgebildet. Das Automatikgetriebe 2 ist über eine Kupplungs-Eingangswelle 5, eine Kupplung 3, eine Kupplungs-Ausgangswelle 6, ein Differenzial 7 mit Antriebsrädern 8, 9 zum Antrieb des Kraftfahrzeugs verbunden. Durch Zusammenpressen der Kupplung 3 mit einem Anpreßdruck p ist das über die Kupplung 3 übertragende Moment einstellbar. Zur Einstellung des über die Kupplung 3 übertragenden Moments ist eine Kupplungsteuerung 12 vorgesehen, die durch Vorgabe eines Soll-Anpreßdrucks p* den Anpreßdruck in der Kupplung 3 einstellt. Der Anpreßdruck ist synonym für eine Anpreßkraft mit der die Kupplung 3 zusammengepreßt wird.

Eingangsgrößen in die Kupplungssteuerung 12 sind die Drehzahl $n_E$ der Kupplungs-Eingangswelle 5, die mittels eines Drehzahlsensors 10 gemessen wird, die Drehzahl $n_A$ der Kupplungs-Ausgangswelle 6, die mit einem Drehzahlsensor 11 gemessen wird, die Übersetzung i des Automatikgetriebes 2 und ein Sollwert $\Delta n^*$ für den Kupplungsschlupf der Kupplung 3 (Soll-Kupplungsschlupf) sowie optional das Moment $T_M$ des Verbrennungsmotors 1 und Information $\Delta T_M$ über die Ungenauigkeit der Information über das Moment $T_M$ des Verbrennungsmotors 1. Der Kupplungsschlupf $\Delta n$ ist definiert als

$$\Delta n = n_E - n_A$$

Das Moment $T_M$ des Verbrennungsmotors 1 sowie die Information $\Delta T_M$ über die Ungenauigkeit der Information über das Moment $T_M$ des Verbrennungsmotors 1 werden zum Beispiel von einer nicht dargestellten Motorsteuerung bereitgestellt.

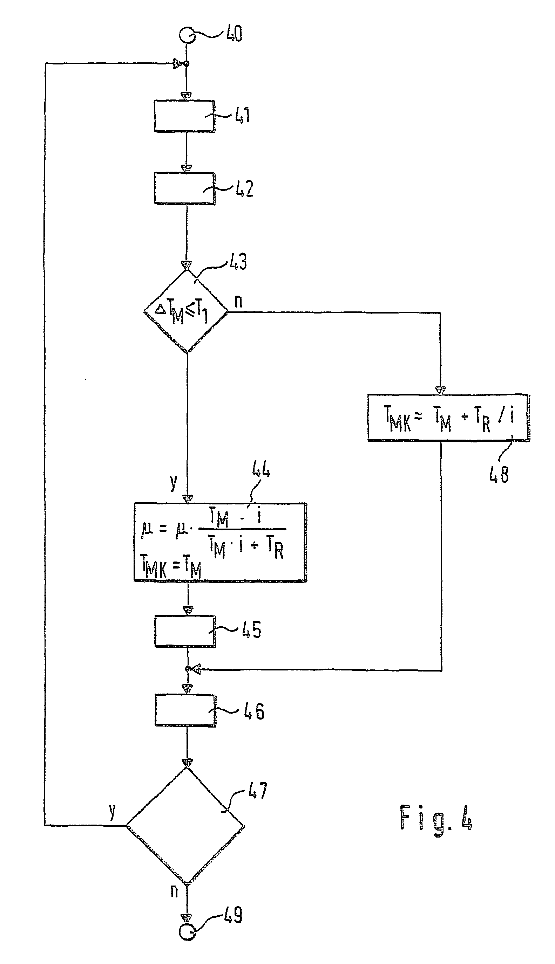

Fig. 2 zeigt die Kupplungssteuerung 12. Sie weist einen Differenzbildner 20, einen Schlupfregler 21 sowie einen Adaptierer 22 auf. Der Schlupfregler 21 ist in Fig. 3 und der Adaptierer in Fig. 4 näher erläutert. Der Differenzbildner ermittelt den Kupplungsschlupf $\Delta n$, der Eingangsgröße in den Schlupfregler 21 ist. Weitere Eingangsgrößen des Schlupfreglers 21 sind der Soll-Kupplungsschlupf $\Delta n^*$, das Motormoment $T_M$, die Übersetzung i des Automatikgetriebes 2 und der Reibkoeffizient $\mu$. Der Reibkoeffizient $\mu$ wird mittels des Adaptierers 22 gebildet. Eingangsgrößen in den Adaptierer 22 sind der Soll-Kupplungsschlupf $\Delta n^*$, die Übersetzung i des Automatikgetriebes 2, das Moment $T_M$ des Verbrennungsmotors 1, Information $\Delta T_M$ über die Ungenauigkeit der Information über das Moment $T_M$ des Verbrennungsmotors 1 sowie ein Differenzmoment $T_R$, das vom Schlupfregler 21 gebildet wird. Neben dem Reibkoeffizient $\mu$ ist ein korrigiertes Motormoment $T_{MK}$ eine weitere Bezugsgröße des Adaptierers 22. Der Schlupfregler 21 bildet ferner den Soll-Anpreßdruck p*.

Fig. 3 zeigt den inneren Aufbau des Schlupfreglers 21. Der Schlupfregler 21 weist einen Filter 31 zur Filterung des Kupplungsschlupfes $\Delta n$ auf. Mittels eines Summierers 36 wird die Differenz zwischen dem Soll-Kupplungsschlupf $\Delta n^*$ und dem mittels des Filters 31 gefilterten Kupplungsschlupfes $\Delta n$ gebildet. Diese Differenz wird mittels eines Negierers 32 negiert und ist Eingangsgröße in einen Regler 33, der in vorteilhafter Ausgestaltung als PID-Regler ausgeführt ist. Ausgangsgröße des Reglers 33 ist das Differenzmoment $T_R$.

Mittels eines Filters 34 wird das Motormoment $T_M$ gefiltert. Das so gefilterte Motormoment $T_M$ wird mittels eines Multiplizierers 70 mit der Übersetzung i des Automatikgetriebes 2 multipliziert und mittels eines Summierers 37 mit dem Differenzmoment $T_R$ addiert. Die Summe aus Differenzmoment $T_R$ und gefilterten und mit der Übersetzung i des Automatikgetriebes 2 multiplizierte Motormoment ist das von der Kupplung 3 zu übertragende Kupplungsmoment $T_K$, das zusammen mit dem Reibkoeffizienten $\mu$ Eingangswert in ein inverses Kupplungsmodel 35 ist. Im inversen Kupplungsmodel 35 ist in beispielhafter Ausgestaltung folgende Gleichung implementiert:

$$p^* = \frac{1}{A_R}\left( \frac{T_K}{\mu \cdot r \cdot Z_R} + F_0 \right)$$

Dabei ist A die Kolbenfläche der Kupplung 3, r der effektive Reibradius der Kupplung 3, $Z_R$ die Anzahl der Reibflächen der Kupplung 3 und $F_0$ die minimal notwendige Kraft zur Drehmomentübertragung mittels der Kupplung 3.

Fig. 4 zeigt einen Ablaufplan, als Implementierung des Adaptierers 22. Dabei bezeichnet Bezugzeichen 40 den Anfang des Ablaufs und Bezugzeichen 49 das Ende des Ablaufs. In einem Schritt 41 werden die Information $T_M$ über das Motormoment, die Information $\Delta T_M$ über die Ungenauigkeit der Information über das Motormoment $T_M$, das Differenzmoment $T_R$, der Soll-Kupplungsschlupf $\Delta n^*$ und der Anpreßdruck p eingelesen.

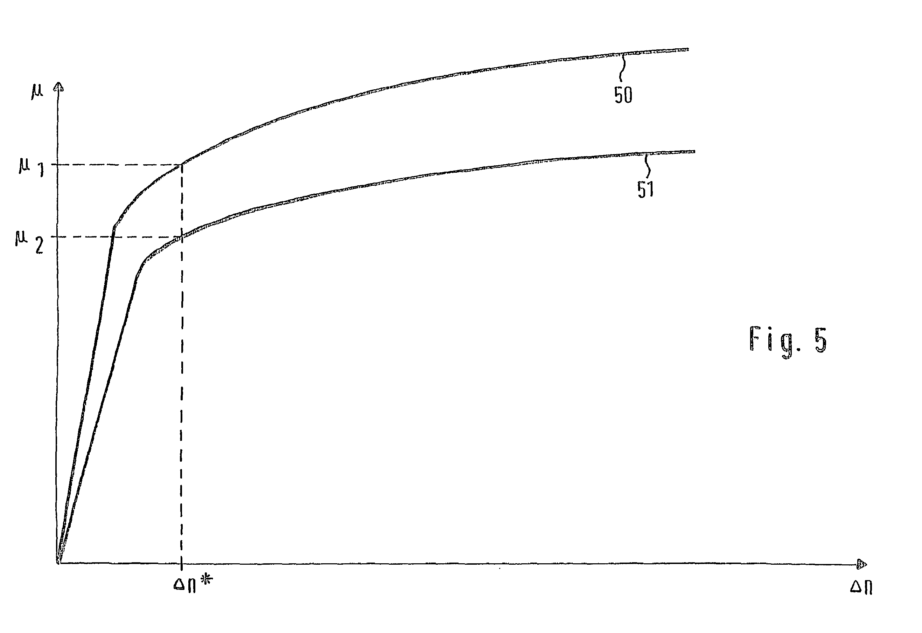

In einem nächsten Schritt 42 wird ein Reibkoeffizient $\mu$ aus dem Soll-Kupplungsschlupf $\Delta n^*$ und dem Anpreßdruck p gebildet. Dies erfolgt in vorteilhafter Ausgestaltung mittels einer vom Anpreßdruck p abhängigen Reibkoeffizient-Schlupf-Kennlinie. Eine solche Kennlinie ist beispielhaft in Fig. 5 dargestellt und mit Bezugzeichen 50 bezeichnet.

Dem Schritt 42 folgt die Abfrage 43 in der abgefragt wird, ob

$$\Delta T_M \leq T_1$$

wobei $T_1$ ein (erster) Toleranzwert ist. Ist

$$\Delta T_M \leq T_1$$

so folgt ein Schritt 44, in dem ein neuer Reibkoeffizient $\mu$ der Kupplung gemäß

$$\mu = \mu + \frac{T_M \cdot i}{T_M \cdot i + T_R}$$

sowie ein korrigiertes Motormoment $T_{MK}$ gemäß

$$T_{MK} = T_M$$

gebildet wird.

Dem Schritt 44 folgt ein Schritt 45 in dem die vom anpreßdruckabhängigen Reibkoeffizient-Schlupf-Kennlinie 50 derart verändert wird, daß der neue Wert für den Reibkoeffizient $\mu$ und der Soll-Kupplungsschlupf $\Delta n^*$ ein Wertepaar auf der veränderten Reibkoeffizient-Schlupf-Kennlinie 51 bilden. Schritt 45 wird durch Fig. 5 verdeutlicht. Dabei bezeichnet $\mu_1$ den Wert für den Reibkoeffizienten $\mu$ für den gültigen Anpreßdruck vor Ausführung des Schritts 45 und $\mu_2$ den Wert des Reibkoeffizienten $\mu$ für den gültigen Anpreßdruck nach Ausführung des Schritts 45. Der Reibkoeffizient $\mu_1$ wird mittels der Kennlinie 50 in Abhängigkeit des Soll-Kupplungsschlupfes $\Delta n^*$ gebildet (siehe Schritt 42). Im Schritt 45 wird in die Reibbeiwert-Kupplungsschlupf-Kennlinie 50 so verändert, daß sich eine Reibbeiwert-Kupplungsschlupf-Kennlinie 51 ergibt, auf der der Wert $\mu_2$ und der Soll-Kupplungsschlupf $\Delta n^*$ ein Wertepaar sind.

Ist

$$\Delta T_M \leq T_1$$

nicht erfüllt, so folgt statt Schritt 44 ein Schritt 48, in dem ein korrigiertes Motormoment $T_{MK}$ gleich der Summe aus durch den Verbrennungsmotor 1 erzeugte Motormoment $T_M$ und dem durch die Übersetzung i des Automatikgetriebes 2 dividierten Differenzmoments $T_R$ gesetzt wird:

$$T_M = T_M + T_R / i$$

Dem Schritt 46 bzw. dem Schritt 48 folgt eine Abfrage 47, in der abgefragt wird, ob der vorangegangene Ablauf wiederholt werden soll. Ist dies der Fall, so folgt Schritt 41. Ist dies nicht der Fall, so wird der Ablauf beendet.

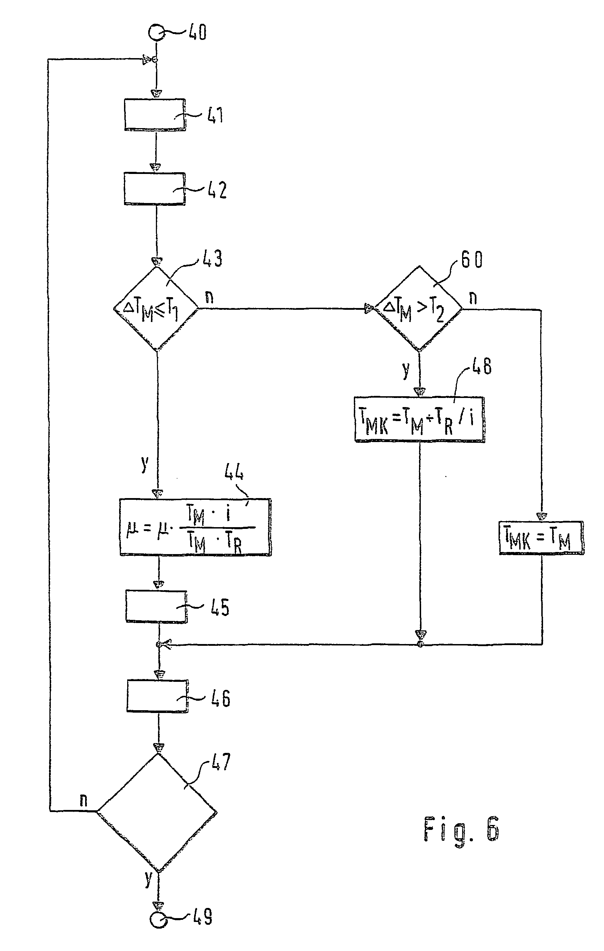

Fig.6 zeigt eine Abwandlung des Ablaufplans aus Fig. 4. Dabei folgt der Abfrage 43 nicht der Schritt 48 sondern eine Abfrage 60. Mit der Abfrage 60 wird abgefragt, ob

$$\Delta T_M > T_2$$

erfüllt ist wobei $T_2$ ein zweiter Toleranzwert ist. Ist diese Bedingung erfüllt, so folgt Schritt 48. Ist die Bedingung dagegen nicht erfüllt, erfolgt Schritt 46.

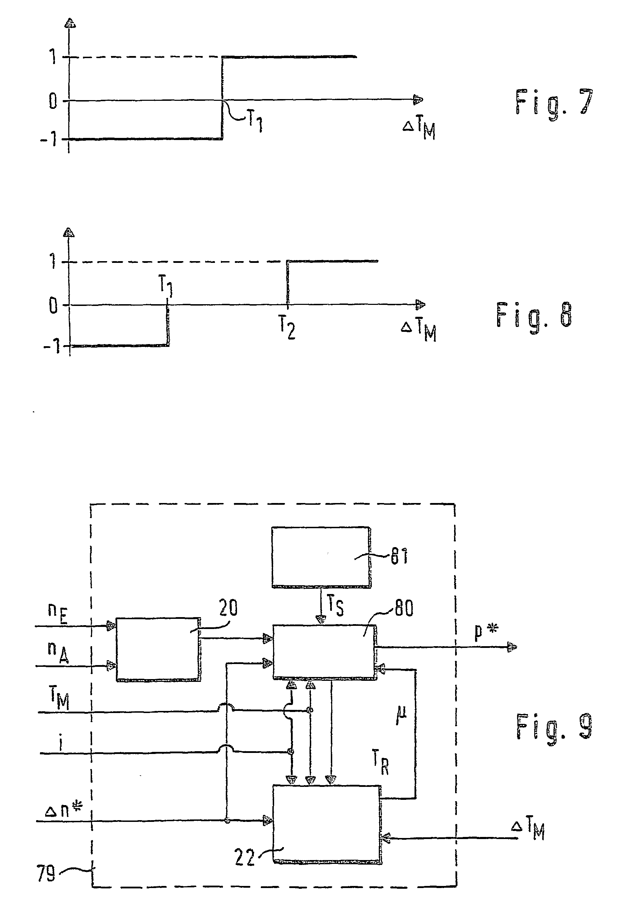

Fig. 7 und Fig. 8 verdeutlichen die Unterschiede zwischen den Ablaufplänen gemäß Fig. 4 und Fig. 6. Dabei ist auf der Abszisse die Information $\Delta T_M$ über die Ungenauigkeit der Information über das Motormoment $T_M$ des Verbrennungsmotors 1 dargestellt. Die Ordinate in Fig. 7 und Fig. 8 gibt an, welche Schritte ausgeführt werden. Dabei symbolisiert der Wert -1 die Ausführung der Schritte 44 und 45, der Wert 1 die Ausführung des Schritts 48 und der Wert 0 weder die Ausführung der Schritte 44 und 45 noch des Schritts 48. Die Abfrage 43 in Fig. 4 entspricht einem binären Schalter. Die Kombination der Abfragen 43 und 60 in Fig. 6 entspricht einem Dreipunkt-Schalter. Anstelle dieser beiden einfachen Schaltertypen sind selbstverständlich auch kompliziertere Schaltvorgänge, wie etwa fließende Übergänge, die z.B. durch Fuzzy-Techniken ausgeführt werden können, denkbar.

Fig. 9 zeigt ein vorteilhaftes Ausführungsbeispiel einer Kupplungssteuerung 79, die als Ersatz für die Kupplungssteuerung 12 in Fig. 1 verwendbar ist. Die Kupplungssteuerung 79 in Fig. 9 weist einen Schlupfregler 80 und eine Schutzeinrichtung 81 zum Schutz des Antriebsaggregats, insbesondere des Automatikgetriebes 2 vor Drehmomentstößen auf. Ausgangsgröße der Schutzeinrichtung 81 ist ein Stoßmoment $T_S$. Das Stoßmoment $T_S$ errechnet sich in vorteilhafter Ausgestaltung gemäß

$$T_s = T_c - \sum\nolimits_{l} J_l \cdot \frac{2\pi \cdot \Delta n_{max}}{\Delta t}$$

Dabei ist

$J_1$ das Trägheitsmoment einer l-ten Komponente des Antriebsaggregats auf der Seite der Kupplung 3, auf der der Verbrennungsmotor 1 angeordnet ist.

$\Delta n_{max}$ der maximal zulässige Kupplungsschlupf

$T_c$ ein konstantes Moment

$\Delta t$ die Zeitdauer, in der ein Nomentenstoß zu einer Erhöhung des Schlupfes führt.

Bei der Einleitung von sogenannten Drehmomentstößen, insbesondere von Drehmomentstößen, die durch die Antriebsräder 8 und 9 in das Antriebsaggregat eingeleitet werden, kann das Automatikgetriebe 2 geschädigt werden. Besonderes kritisch ist dabei der Schutz z.B. eines Variators eines CVT (Continuously Variable Transmission). Bereits ein kurzzeitiges Durchrutschen eines solchen Umschlingungsgetriebes aufgrund eines Drehmomentstoßes kann zu bleibenden Schäden im Umschlingungsgetriebe führen. Derartige Drehmomentstöße treten z.B. bei einem Übergang von einem Fahrbahnbelag mit einem niedrigen Reibungskoeffizienten zu einem Fahrbahnbelag mit einem hohen Reibungskoeffizienten auf. Beispiele sind z.B. der Übergang von einer eisbedeckten Fahrbahn zu einer trocknen Fahrbahn oder das Überfahren von Eisenbahnschienen.

Ist die Schlupfdauer $\Delta t$ von untergeordneter Bedeutung, so kann das Stoßmoment $T_s$ gleich dem konstanten Moment $T_c$ gesetzt werden.

In vorteilhafter Ausgestaltung ist vorgesehen, das Stoßmoment $T_s$ an eine Getriebesteuerung zu übertragen, so daß z.B. der Anpreßdruck in einem Umschlingungsgetriebe entsprechend erhöht werden kann. Der erforderliche Anpreßdruck im Umschlingungsgetriebe ist in Abhängigkeit des Stoßmoments $T_s$ anzuheben.

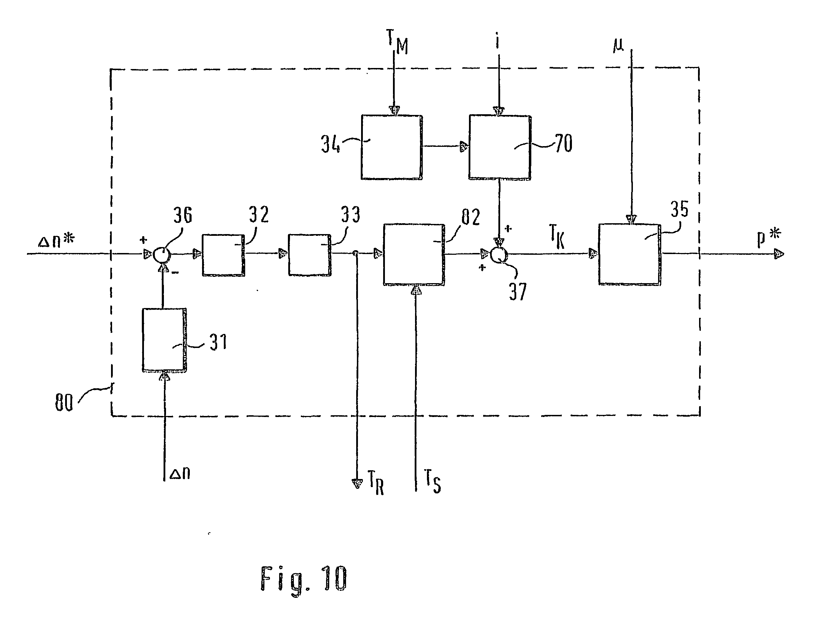

Fig. 10 zeigt den Schlupfregler 80 in detaillierter Darstellung. Gegenüber dem Schlupfregler 21 unterscheidet sich der Schlupfregler 80 durch einen Minimalwertbildner 82. Der Minimalwertbildner 82 vergleicht das Differenzmoment $T_R$ und das Stoßmoment $T_s$ und gibt das kleinere Moment als Ausgangswert aus.

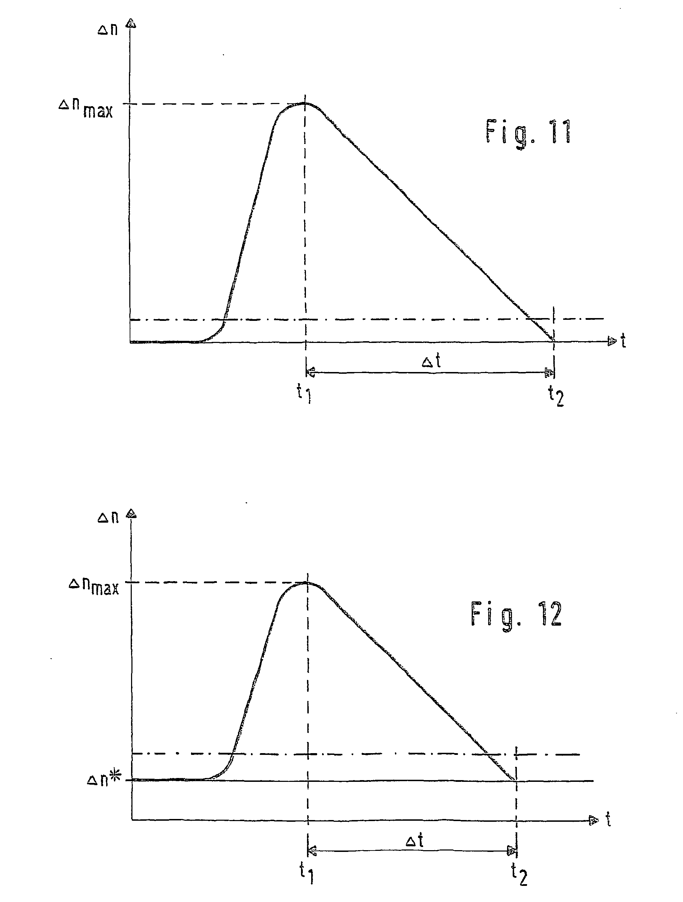

Fig. 11 zeigt einen entsprechenden Schlupf $\Delta n$ aufgetragen über die Zeit t bei Verwendung einer Kupplungssteuerung 79 gemäß Fig. 9. Dabei bezeichnet der Zeitpunkt $t_1$ den Zeitpunkt, an dem der maximal zulässige Schlupf $\Delta n_{max}$ erreicht ist und $t_2$ den Zeitpunkt, an dem der durch den Drehmomentenstoß bedingte Schlupf abgeklungen ist. Die Zeitdauer zwischen den Zeitpunkten $t_2$ und $t_1$ ist die Schlupfzeit $\Delta t$. Fig. 11 zeigt dabei den Verlauf des Kupplungsschlupfes $\Delta n$, wenn der Soll-Kupplungschlupf $\Delta n^*$ gleich Null ist. Für den Fall, daß der Soll-Kupplungsschlupf $\Delta n^*$ ungleich

Null ist, zeigt Fig. 12 den Verlauf des Kupplungsschlupfes $\Delta$n. In diesem Fall ist der Kupplungsschlupf $\Delta$n zum Zeitpunkt $t_2$ gleich dem Soll-Kupplungsschlupfes $\Delta$n*.

Um die Kupplung 3 vor thermischer Überlastung zu schützen, wird die Schlupfzeit $\Delta$t vorteilhafterweise in Abhängigkeit der thermischen Beanspruchung in der Kupplung 3 eingestellt. Dazu wird die Temperatur der Kupplung 3 mittels eines thermodynamischen Modells abgeschätzt. Überschreitet die geschätzte Temperatur der Kupplung 3 eine kritische Temperaturgrenze, so wird der Soll-Kupplungsschlupf $\Delta$n* auf Null reduziert. Zudem wird in vorteilhafter Ausgestaltung ein sogenannter Reserve-Anpreßdruck erhöht. Dies kann z.B. dadurch erfolgen, daß der Wert $F_0$ erhöht wird. Alternativ dazu kann auch ein sogenanntes Reservemoment erhöht werden. Dies erfolgt z.B. dadurch, daß der Wert $T_c$ erhöht wird.

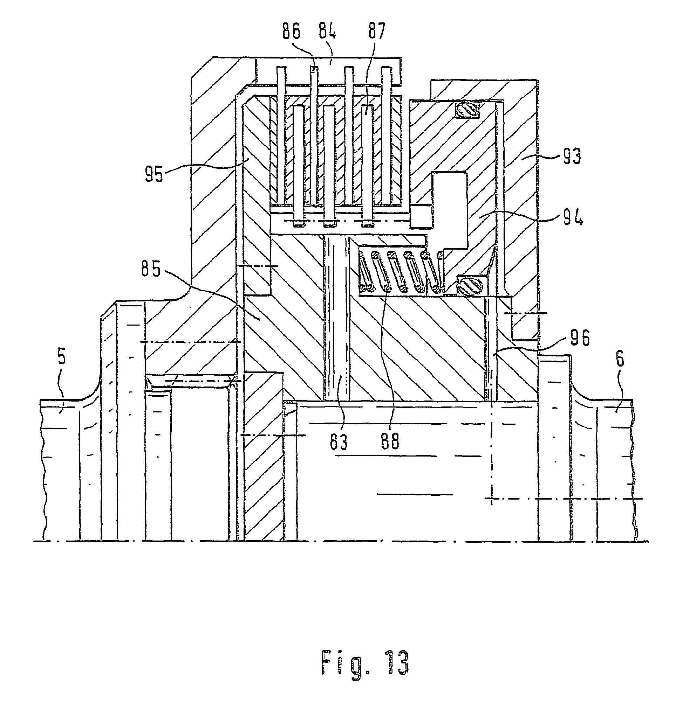

Fig. 13 zeigt eine Kupplung 3 in beispielhafter Ausgestaltung. Dabei bezeichnet Bezugszeichen 83 eine Schmierölzuführung für Hydrauliköl, Bezugszeichen 84 einen Außenmitnehmer, Bezugszeichen 85 einen Innenmitnehmer, Bezugszeichen 86 eine Außenlamelle, Bezugszeichen 87 eine Innenlamelle, Bezugszeichen 88 eine Rückholfeder, Bezugszeichen 93 einen Zylinder, Bezugszeichen 94 einen Kolben, Bezugszeichen 95 eine Druckplatte und Bezugszeichen 96 eine Druckmittelzuführung. Am Außenmitnehmer 84, welcher mit der Kupplungs-Eingangswelle 5 verbunden ist, sind Außenlamellen 86, in vorteilhafter Ausgestaltung Stahllamellen ohne Reibbelag, angeordnet. Der mit der Kupplungs-Ausgangswelle 6 verbundene Innenmitnehmer 85 nimmt die Innenlamellen 87 auf, die mit einem Reibbelag beschichtet sind. Bei Einleitung von Hydrauliköl mit einem definierten Druckniveau über die Druckmittelzuführung 96 in den Zylinder 93 bewegt sich der Kolben 94 gegen die Kraft der Rückholfeder 88 in Richtung der Druckplatte 95 und drückt das Lamellenpaket, daß aus Innen- und Außenlamellen 87 und 86 besteht, zusammen. Zur Kühlung des Lamellenpakets wird über die Schmierölzuführung 83 Hydrauliköl zu den Innen- und Außenlamellen 87 und 86 geleitet.

Bezugszeichenliste

| | |
|---|---|
| 1 | Motor |
| 2 | Getriebe |
| 3 | Kupplung |
| 4 | Welle |
| 5 | Kupplungs-Eingangswelle |
| 6 | Kupplungs-Ausgangswelle |
| 7 | Differential |
| 8, 9 | Antriebsräder |
| 10, 11 | Drehzahlsensoren |
| 12 ,79 | Kupplungssteuerung |
| | |
| 20 | Differenzbildner |
| 21 , 80 | Schlupfregler |
| 22 | Adaptierer |
| | |
| 31, 34 | Filter |
| 32 | Negierer |
| 33 | Regler |
| 35 | inverses Kupplungsmodell |
| 36 , 37 | Summierer |
| | |
| 40 | Anfang des Ablaufs |
| 41, 42, 44, 45, 46, 48, | Schritt |
| 43, 47, 60, | Abfrage |
| | |
| 49 | Ende des Ablaufs |
| | |
| 50, 51 | Reibkoeffizient-Schlupf-Kennlinie |
| | |
| 70 | Multiplizierer |
| | |
| 81 | Schutzeinrichtung |

82    Minimalwertbildner
83    Schmierölzuführung
84    Außenmitnehmer
85    Innenmitnehmer
86    Außenlamelle
87    Innenlamelle
88    Rückholfeder

91    Motormoment-Sollwertgeber
93    Zylinder
94    Kolben
95    Druckplatte
96    Druckmittelzuführung

$n_E$      Drehzahl der Kupplungs-Eingangswelle
$n_A$      Drehzahl der Kupplungs-Ausgangswelle
$T_M$      Information über das Motormoment
$\Delta T_M$   Ungenauigkeit der Information über das Motormoment

$T_R$      Differenzmoment (Reglerausgang)
$T_k$      Kupplungsmoment
$T_1$      erster Toleranzwert
$T_2$      zweiter Toleranzwert
$\Delta n$      Kupplungsschlupf
$\Delta n^*$      Soll-Kupplungsschlupf
i         Übersetzung des Getriebes
p         Anpreßdruck
$p^*$      Soll-Anpreßdruck
$\mu, \mu_1, \mu_2$   Reibkoeffizient
$J_1$      Trägheitsmoment des Antriebsaggregats auf der Seite der Kupplung 1, auf der der Verbrennungsmotor angeordnet ist.
$\Delta n_{max}$   maximal zulässige Kupplungsschlupf
$T_c$      konstantes Moment
$\Delta t$      Zeitdauer, in der ein Momentenstoß zu einer Erhöhung des Schlupfes führt
$A_R$      Reibfläche der Stahllamellen der Kupplung
$Z_R$      Anzahl der Reibflächen der Kupplung

$T_{MK}$     korrigiertes Motormoment
$F_0$      minimal notwendige Kraft zur Drehmomentübertragung mittels der Kupplung
$T_S$      Stoßmoment
$t_1$      Zeitpunkt
$t_2$      Zeitpunkt

r    effektiver Reibradius der Kupplung

**Patentansprüche**

1.  Verfahren zum Betrieb einer Kupplung (3) zwischen einem Verbrennungsmotor (1) und zumindest einem Antriebsrad (8, 9) eines Fahrzeugs, wobei durch Zusammenpressen der Kupplung (3) mit einer Anpreßkraft oder einem Anpreßdruck (p) ein Moment zwischen dem Verbrennungsmotor (1) und dem Antriebsrad (8, 9) übertragen wird und die Anpreßkraft oder der Anpreßdruck (p) in Abhängigkeit eines Kupplungsschlupfes in der Kupplung (3) bei Übertragung des Momentes zwischen dem Verbrennungsmotor (1) und dem Antriebsrad (8, 9) und einem Soll-Kupplungsschlupf geregelt wird,
    **dadurch gekennzeichnet,**
    **daß** die Anpreßkraft oder der Anpreßdruck (p) mittels eines inversen Kupplungsmodells geregelt wird, das die Anpreßkraft oder den Anpreßdruck (p) in Abhängigkeit des über die Kupplung (3) zu übertragenden Momentes errechnet.

**2.** Verfahren nach Anspruch 1,
**dadurch gekennzeichnet,**
**daß** die Anpreßkraft oder der Anpreßdruck (p) in Abhängigkeit der Differenz zwischen dem Kupplungsschlupf und dem Soll-Kupplungsschlupf geregelt wird.

**3.** Verfahren nach Anspruch 1 oder 2,
**dadurch gekennzeichnet,**
**daß** die Anpreßkraft oder der Anpreßdruck (p) mittels eines Schlupfreglers (21, 80) geregelt wird.

**4.** Einrichtung zum Betrieb einer Kupplung (3) zwischen einem Verbrennungsmotor (1) und zumindest einem Antriebsrad (8, 9) eines Fahrzeugs, insbesondere gemäß einem Verfahren nach einem der vorhergehenden Ansprüche, wobei durch Zusammenpressen der Kupplung (3) mit einer Anpreßkraft oder einem Anpreßdruck (p) ein Moment zwischen dem Verbrennungsmotor (1) und dem Antriebsrad (8, 9) übertragen wird und ein Schlupfregler (21, 80) zur Regelung der Anpreßkraft oder des Anpreßdrucks(p) in Abhängigkeit eines Kupplungsschlupfes in der Kupplung (3) bei Übertragung des Momentes zwischen dem Verbrennungsmotors (1) und dem Antriebsrad (8, 9) und einem Soll-Kupplungsschlupf vorgesehen ist,
**dadurch gekennzeichnet,**
**daß** der Schlupfregler (21, 80) ein inverses Kupplungsmodell zur Errechnung der Anpreßkraft oder des Anpreßdrucks (p) in Abhängigkeit des über die Kupplung (3) zu übertragenden Momentes aufweist.

**5.** Einrichtung nach Anspruch 4,
**dadurch gekennzeichnet,**
**daß** der Schlupfregler (21, 80) einen Regler zur Errechnung eines Differenzmomentes in Abhängigkeit des Kupplungsschlupfes und dem Soll-Kupplungsschlupf aufweist.

**6.** Einrichtung nach Anspruch 5,
**dadurch gekennzeichnet,**
**daß** die Eingangsgröße des inversen Kupplungsmodells von dem Differenzmoment abhängig ist.

**7.** Einrichtung nach Anspruch 5 oder 6,
**dadurch gekennzeichnet,**
**daß** die Summe aus Differenzmoment und dem durch den Verbrennungsmotor (1) erzeugte Motormoment Eingangsgröße des inversen Kupplungsmodells ist.

**8.** Einrichtung nach Anspruch 4 oder 7,
**dadurch gekennzeichnet,**
**daß** der Reibekoeffizient der Kupplung (3) ein Parameter des inversen Kupplungsmodells ist.

**9.** Einrichtung nach Anspruch 8,
**dadurch gekennzeichnet,**
**daß** sie einen Adaptierer zur Adaption des Reibekoeffizienten der Kupplung (3) aufweist.

**Claims**

**1.** Method for operating a clutch (3) between an internal combustion engine (1) and at least one drive wheel (8, 9) of a vehicle, a moment being transmitted between the internal combustion engine (1) and the drive wheel (8, 9) by pressing together of the clutch (3) with a contact force or a contact pressure (p), and the contact force or the contact pressure (p) being regulated as a function of a clutch slip in the clutch (3) during transmission of the moment between the internal combustion engine (1) and the drive wheel (8, 9) and of a setpoint clutch slip, **characterized in that** the contact force or the contact pressure (p) is regulated by means of an inverse clutch model which calculates the contact force or the contact pressure (p) as a function of the moment which is to be transmitted via the clutch (3).

**2.** Method according to Claim 1, **characterized in that** the contact force or the contact pressure (p) is regulated as a function of the difference between the clutch slip and the setpoint clutch slip.

**3.** Method according to Clutch 1 or 2, **characterized in that** the contact force or the contact pressure (p) is regulated by means of a slip controller (21, 80).

4. Device for operating a clutch (3) between an internal combustion engine (1) and at least one drive wheel (8, 9) of a vehicle, in particular in accordance with a method according to one of the preceding claims, a moment being transmitted between the internal combustion engine (1) and the drive wheel (8, 9) by pressing together of the clutch (3) with a contact force or a contact pressure (p), and a slip controller (21, 80) being provided for regulating the contact force or the contact pressure (p) as a function of a clutch slip in the clutch (3) during transmission of the moment between the internal combustion engine (1) and the drive wheel (8, 9) and of a setpoint clutch slip, **characterized in that** the slip controller (21, 80) has an inverse clutch model for calculating the contact force or the contact pressure (p) as a function of the moment which is to be transmitted via the clutch (3).

5. Device according to Claim 4, **characterized in that** the slip controller (21, 80) has a controller for calculating a differential moment as a function of the clutch slip and the setpoint clutch slip.

6. Device according to Claim 5, **characterized in that** the input variable of the inverse clutch model is dependent on the differential moment.

7. Device according to Claim 5 or 6, **characterized in that** the sum of the differential moment and the engine moment which is generated by the internal combustion engine (1) is an input variable of the inverse clutch model.

8. Device according to Claim 4 or 7, **characterized in that** the coefficient of friction of the clutch (3) is a parameter of the inverse clutch model.

9. Device according to Claim 8, **characterized in that** it has an adapter for adapting the coefficient of friction of the clutch (3).

**Revendications**

1. Procédé d'exploitation d'un embrayage (3) entre un moteur à combustion interne (1) et au moins une roue motrice (8, 9) d'un véhicule, selon lequel la compression de l'embrayage (3) avec une force de pression ou une pression de serrage (p) permet de transmettre un couple entre le moteur à combustion interne (1) et la roue motrice (8, 9), et la force de pression ou la pression de serrage (p) est régulée en fonction d'un patinage dans l'embrayage (3) lors de la transmission du couple entre le moteur à combustion interne (1), la roue motrice (8, 9) et avec un patinage de cousigne de l'embrayage,
**caractérisé en ce que**
la force de pression ou la pression de serrage (p) est régulée à l'aide d'un modèle d'embrayage inverse qui calcule la force de pression ou la pression de serrage (p) en fonction du couple à transmettre par l'embrayage (3).

2. Procédé selon la revendication 1,
**caractérisé en ce que**
la force de pression ou la pression de serrage (p) est régulée en fonction de la différence entre le patinage de l'embrayage et le patinage de consigne de l'embrayage.

3. Procédé selon la revendication 1 ou 2,
**caractérisé en ce que**
la force de pression ou la pression de serrage (p) est régulée à l'aide d'un régulateur antipatinage (21, 80).

4. Dispositif d'exploitation d'un embrayage (3) entre un moteur à combustion interne (1) et au moins une roue motrice (8, 9) d'un véhicule, notamment suivant un procédé selon l'une quelconque des revendications précédentes, selon lequel la compression de l'embrayage (3) avec une force de pression ou une pression de serrage (p) permet de transmettre un couple entre le moteur à combustion interne (1) et la roue motrice (8, 9), et un régulateur antipatinage (21, 80) régule de la force de pression ou la pression de serrage (p) en fonction d'un patinage dans l'embrayage (3) lors de la transmission du couple entre le moteur à combustion interne (1) et la roue motrice (8, 9), avec un patinage de consigne de l'embrayage,
**caractérisé en ce que**
le régulateur antipatinage (21, 80) présente un modèle d'embrayage inverse pour le calcul de la force de pression ou de la pression de serrage (p) en fonction du couple à transmettre par l'embrayage (3).

5. Dispositif selon la revendication 4,

**caractérisé en ce que**

le régulateur antipatinage (21, 80) présente un régulateur pour le calcul d'un couple différentiel en fonction du patinage de l'embrayage et du patinage de consigne de l'embrayage.

6. Dispositif selon la revendication 5,
   **caractérisé en ce que**
   la grandeur d'entrée du modèle d'embrayage inverse dépend du couple différentiel.

7. Dispositif selon la revendication 5 ou 6,
   **caractérisé en ce que**
   la somme du couple différentiel et du couple moteur généré par le moteur à combustion interne (1) est la grandeur d'entrée du modèle d'embrayage inverse.

8. Dispositif selon la revendication 4 ou 7,
   **caractérisé en ce que**
   le coefficient de frottement de l'embrayage (3) est un paramètre du modèle d'embrayage inverse.

9. Dispositif selon la revendication 8,
   **caractérisé en ce qu'**
   il présente un adaptateur destiné à l'adaptation du coefficient de frottement de l'embrayage (3).

Fig. 1

Fig. 2

Fig. 3

Fig. 4

$$T_{MK} = T_M + T_R / i$$

48

$$\mu = \mu \cdot \frac{T_M \cdot i}{T_M \cdot i + T_R}$$
$$T_{MK} = T_M$$

$\Delta T_M \le T_1$

Fig. 5

$$\mu = \mu \cdot \frac{T_M \cdot i}{T_M \cdot T_R}$$

$$T_{MK} = T_M \div T_R / i$$

$$T_{MK} = T_M$$

Fig. 6

Fig. 7

Fig. 8

Fig. 9

15

Fig. 10

EP 1 238 202 B1

Fig. 11

Fig. 12

Fig. 13